Europäisches Patentamt

European Patent Office

Office européen des brevets

(11) Publication number: **0 385 269**
**A2**

# EUROPEAN PATENT APPLICATION

(21) Application number: **90103439.7**

(51) Int. Cl.5: **G06F 3/12, G06F 15/72**

(22) Date of filing: **22.02.90**

(30) Priority: **27.02.89 JP 42997/89**

(43) Date of publication of application:
**05.09.90 Bulletin 90/36**

(84) Designated Contracting States:
**DE FR GB IT**

(71) Applicant: **HITACHI, LTD.**
**6, Kanda Surugadai 4-chome**
**Chiyoda-ku, Tokyo 100(JP)**

(72) Inventor: **Makioka, Junichi**
**3-14-B104, Higashitaga-cho**
**Hitachi-shi, Ibaraki 316(JP)**

(74) Representative: **Patentanwälte Beetz sen. -**
**Beetz jun. Timpe - Siegfried -**
**Schmitt-Fumian**
**Steinsdorfstrasse 10**
**D-8000 München 22(DE)**

(54) **Apparatus and method for generating character pattern.**

(57) An original outline information of a character pattern has a predetermined thickness dimension and is memorized. The original outline information (251) of the character pattern is converted to a transformed outline information of the character pattern. The transformed outline information is made to vary a lateral thickness dimension and/or a longitudinal thickness dimension. The transformed outline information is memorized in a bit map memory (116). A fill-in position information (352) is prepared in accordance with the transformed outline information. An outline of a character pattern dot information (254) is filled in inside in accordance with the transformed outline information. The character pattern having a different thickness dimension is generated at a high speed. The character pattern is emphasized with a well balance and is generated with a bold thickness.

*FIG. 2*

## APPARATUS AND METHOD FOR GENERATING CHARACTER PATTERN

The present invention relates to an apparatus and a method for generating a character pattern in which a character pattern is outputted upon receipt of an input signal.

A conventional character pattern generating apparatus is known from JP-A-82476/1987. The character pattern generating apparatus, in which a character pattern is outputted upon receipt of an input signal, comprises means for memorizing a character pattern outline information, means for memorizing a character pattern dot information, means for converting the character pattern outline information to the character pattern dot information, and means for filling in the outline inside from the character pattern outline information.

However, in the above stated character pattern generating apparatus, the obtainement of the character pattern having a different thickness to dimension ratio as an original thickness to dimension ratio of the character pattern is not considered. The original thickness to dimension ratio of the character pattern corresponds to the original outer shape dimensions of the character pattern. However, it is limited merely to perform an enlargement, a reduction, and a rotation having a plurality of frames of the character pattern.

An object of the present invention is to provide an apparatus and a method for generating a character pattern wherein a character pattern having a different thickness to dimension ratio as an original thickness to dimension ratio of the character pattern is generated at high speed.

Another object of the present invention is to provide an apparatus and a method for generating a character pattern wherein a character pattern having a different thickness to dimension ratio as an original thickness to dimension ratio of the character pattern is generated at high speed and also with only a small work memory capacity needed.

A further object of the present invention is to provide an apparatus and a method for generating a character pattern and wherein a character pattern having a different thickness to dimension ratio as an original thickness to dimension ratio of the character pattern is generated so as to arrange it with a well balance.

A still further object of the present invention is to provide an apparatus and a method for generating a character pattern wherein a character pattern having a different thickness to dimension ratio as an original thickness to dimension ratio of the character pattern is generated so as to put more emphasis on those characters.

These objects are accomplished with a character pattern generating apparatus and method as claimed.

Dependent claims are directed on features of preferred embodiments of the invention.

In accordance with the present invention, an apparatus for generating character pattern is provided in which a character pattern is outputted upon receipt of an input signal. The character pattern generating apparatus comprises, means for memorizing an original character pattern outline information, the original character pattern outline information has a predetermined thickness to dimension ratio, means for converting the original character pattern outline information in the original character pattern outline information memory means to a transformed character pattern outline information, the transformed character pattern outline information has a different thickness to dimension ratio as the predetermined thickness to dimension ratio of the original character pattern outline information, means for memorizing the transformed character pattern outline information of the original character pattern outline information conversion means, means for preparing a character pattern dot information, an outline of the character pattern dot information is filled in inside in accordance with the transformed character pattern outline information of the transformed character pattern outline information memory means, and means for memorizing the character pattern dot information of the character pattern dot information preparation means.

The character pattern generating apparatus comprises, means for memorizing an original character pattern outline information, the original character pattern outline information has a predetermined thickness to dimension ratio, means for converting the original character pattern outline information in the original character pattern outline information memory means to a transformed character pattern outline information, the transformed character pattern outline information has a different thickness to dimension ratio as the predetermined thickness to dimension ratio of the original character pattern outline information, means for memorizing the transformed character pattern outline information of the original character pattern outline information conversion means, means for preparing a fill-in position information in accordance with the tranformed character pattern outline information of the transformed character pattern outline information memory means, means for preparing a character pattern dot information, an outline of the character pattern dot information is filled in inside in accordance with the transformed character pattern outline information of the transformed character pattern outline information memory means, and means for memorizing the character pattern dot information of the character pattern dot information preparation means.

The character pattern generating apparatus comprises, means for memorizing a character pattern in form of outline information, means for memorizing the character pattern in form of dot information, and means for converting to information in which a base line of the character pattern is made to be a constant in accordance with a different thickness to dimension ratio of the character pattern as an original thickness to dimension ratio of the character pattern.

In accordance with the present invention, the apparatus for generating character pattern in which a character pattern is sent to print means upon receipt of a printing information from calculation means. The character pattern generating apparatus comprises, font memory means for memorizing an original character pattern outline information, the original character pattern outline information has a predetermined thickness to dimension ratio, conversion means for converting the original character pattern outline information in the font memory means to a transformed character pattern outline information, the transformed character pattern outline information has a different thickness to dimension ratio as the predetermined thickness to dimension ratio of the original character pattern outline information, a base line of the character pattern is made to be a constant in accordance with the different thickness to dimension ratio of the character pattern as the original thickness to dimension ratio of the character pattern, memory means for memorizing the transformed character pattern outline information of the original character pattern outline information conversion means, preparation means for preparing a fill-in position information in accordance with the transformed character pattern outline information of the transformed character pattern outline information memory means, preparation means for preparing a character pattern dot information, an outline of the character pattern dot information is filled in inside in accordance with the transformed character pattern outline information of the transformed character pattern outline information memory means, and a bit map memory means for memorizing the character pattern dot information of the character pattern dot information preparation means.

In accordance with the present invention, the method for generating a character pattern comprises the step of outputting a character pattern upon receipt of an input signal. After a character pattern outline information is converted to another character pattern outline information with a different thickness to dimension ratio as an original thickness to dimension ratio, a character pattern outline information is memorized by filling in the outline inside.

The method for generating a character pattern comprises further the steps of memorizing an original character pattern outline information, the original character pattern outline information has a predetermined thickness to dimension ratio, converting the original character pattern outline information to a transformed character pattern outline information, the transformed character pattern outline information has a different thickness to dimension ratio as the predetermined thickness to dimension ratio of the original character pattern outline information, memorizing the transformed character pattern outline information, preparing a character pattern dot information, an outline of the character pattern dot information is filled in inside in accordance with the transformed character pattern outline information, and memorizing the character pattern dot information.

The method for generating a character pattern comprises further steps of, memorizing an original character pattern outline information, the original character pattern outline information has a predetermined thickness dimension ratio, a step for converting the original character pattern outline information to a transformed character pattern outline information, the transformed character pattern outline information has a different thickness to dimension ratio as the predetermined thickness to dimension ratio of the original character pattern outline in formation, memorizing the transformed character pattern outline information, preparing a fill-in position information in accordance with the transformed character pattern outline information, preparing a character pattern dot information, an outline of the character pattern dot information is filled in inside in accordance with the transformed character pattern outline information, and memorizing the character pattern dot information.

The method for generating a character pattern comprises further steps of, memorizing a character pattern with a form of an outline information, memorizing the character pattern in form of a dot information, and converting to an information in which a base line of the character pattern is made to be a constant in accordance with a different thickness dimension ratio of the character pattern as an original thickness to dimension ratio of the character pattern.

In accordance with the present invention a character pattern is sent to print means by receiving a printing information from calculation means. The method for generating a character pattern comprises steps of, memorizing an original character pattern outline information, the orginal character pattern outline information has a predetermined thickness to dimension ratio, converting the origi nal character pattern outline information to a transformed character pattern outline information, the transformed character pattern outline information has a different thickness dimension ratio as against the predetermined thickness dimension ratio of the original character pattern outline information, a base line of the character pattern is made to be a constant in accordance with the different thickness to dimension ratio of the character pattern as the original thickness to dimension ratio of the character pattern, memorizing the transformed character pattern outline information, preparing a fill-in position information in accordance with the transformed character pattern outline information, preparing a character pattern dot information, an outline of the character pattern dot information is filled in inside in accordance with the transformed character pattern outline information, and memorizing the character pattern dot information.

According to the present invention, since it has means for converting to the character pattern having the different thickness to dimension ratio as the original thickness to dimension ratio of the character pattern, the character pattern is emphasized and the character pattern having a bold thickness is generated by mixing partially the character pattern having the different thickness dimension ratio in the character pattern to be generated, thereby the sentence can be emphasized all over.

Further, since it has means for converting the character pattern outline information to the character pattern outline information having the different thickness to dimension ratio as the original thickness to dimension ratio of the character pattern, and means for memorizing the character pattern dot information in the memory by filling in the outline inside from the converted character pattern outline information, even in the character pattern having the different thickness to dimension ratio, the number for describing the picture to the memory is ended only one time.

Accordingly, in comparison with the dot information of the character pattern being generated by inquiring the outline line dot information from the character pattern outline information, the character pattern can be generated at a high speed.

Further, since it has means for memorizing the character pattern outline information converted to have different thickness to dimension ratio as the original thickness to dimension ratio of the character pattern, means for preparing the fill-in position information in accordance with the converted character pattern outline information, and means for preparing the character pattern dot information in which the outline of the character pattern outline information is fill-in inside in accordance with the filled in position information, at the position information during the filling in the memory can use only a memory in proportion to the longitudinal length of the character pattern.

Accordingly, the character pattern having the different thickness to dimension ratio as the original thickness to dimension ratio of the character pattern can be generated with a small number memory.

Moreover, since it has means for converting the information in which the base line of the character pattern is a constant with the different thickness to dimension ratio as the original thickness to dimension ratio of the character pattern, even the character pattern having the bold thickness mixed partially in the character pattern to be generated, it can have a well balance with which the center of each character pattern is agree.

Further, since it has means for converting the information in which the base line of the character pattern is moved with the different thickness to dimension ratio as original thickness to dimension ratio of the character pattern, the character pattern can be emphasized not only by the thickness but also the enlargement of the character pattern.

According to the present invention, the character pattern generating apparatus and method can provide cha racter pattern having different thickness to dimension ratios as the original thickness to dimension ratios of original character pattern at high speed and with the need of only a small memory and it can also be prepared with a well balance and with emphasis on certain patterns.

Brief Description of the Drawings:

Fig. 1 is a principle block diagram showing a character pattern generating apparatus according to the present invention;

Fig. 2 is a flow chart showing a character pattern generating method according to one embodiment of the present invention;

Fig. 3 is a flow chart showing a character pattern generating method according to another embodiment of the present invention;

Fig. 4 is an explanatory view showing a character pattern A which is memorized in a font ROM according to one embodiment of the present invention;

Fig. 5 is a processing flow chart showing an outline line processing apparatus according to one embodiment of the present invention;

Fig. 6 is a processing flow chart showing an outline line processing apparatus according to one embodiment of the present invention;

Fig. 7 is a processing flow chart showing an outline line processing apparatus according to another embodiment of the present invention;

Fig. 8 is a processing flow chart showing an outline line processing apparatus according to a further embodiment of the present invention;

Fig. 9 is an explanatory view showing a character pattern which is converted by the processing flow charts shown in Fig. 5;

Fig. 10 is an explanatory view showing a character pattern which is converted by the processing flow charts shown in Fig. 6;

Fig. 11 is an explanatory view showing a character pattern which is converted by the processing flow charts shown in Figs. 5 and 6;

Fig. 12 is an explanatory view showing a character pattern which is converted by the processing flow charts shown in Fig. 7;

Fig. 13 is an explanatory view showing a character pattern which is converted by the processing flow charts shown in Fig. 8;

Fig. 14 is an explanatory view showing a character pattern which is converted by the processing flow charts shown in Figs. 7 and 8;

Fig. 15 is a flow chart showing a fill-in position information preparing processing apparatus shown in Fig. 2 according to one embodiment of the present invention;

Fig. 16 is a flow chart showing a fill-in position information preparing processing apparatus shown in Fig. 3 according to another embodiment of the present invention;

Fig. 17 is a flow chart showing a character pattern describing processing apparatus shown in Fig. 2;

Fig. 18 is a flow chart showing the character pattern describing processing apparatus shown in Fig. 3;

Fig. 19 is a data flow showing the character pattern generating method shown in Fig. 2;

Fig. 20 is a data flow showing the character pattern generating method shown in Fig. 3;

Fig. 21 is a data flow showing the character pattern generating method shown in Fig. 19;

Fig. 22 is a data flow showing the character pattern generating method shown in Fig. 20; and

Fig. 23 is a different explanatory view showing an outline line information of a character pattern according to the present invention.

Description of the Invention:

Herein-after, one embodiment of the character pattern generating apparatus and method according to the present invention will be explained with reference to the drawings.

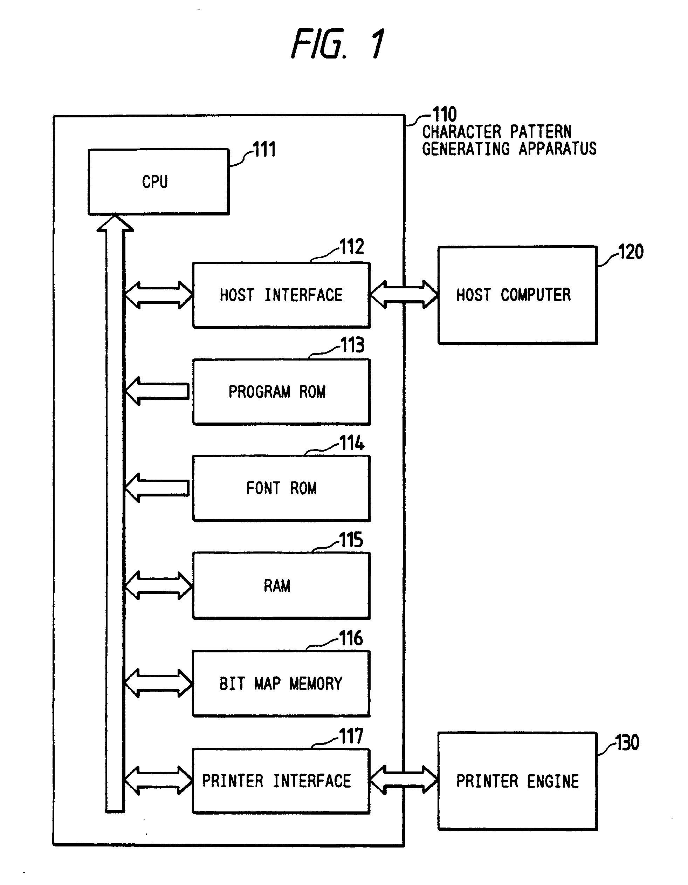

Fig. 1 shows a principle block diagram of a character pattern generating apparatus. A host computer 120 sends a printing information such as an index code, a size, a relative thickness, and a printing position of a character for printing into a character pattern generating apparatus 110. In place of the host computer 120, it can adopt an input apparatus such as a keyboard.

The character pattern generating apparatus 110 receives the above stated printing information with respect to the character through a host interface 112. CPU (central processing unit) 111 processes the above stated printing information in accordance with a character pattern generating program which is memorized in a program ROM (read only memory) 113. Namely, a character pattern dot information is written in a bit map memory 116 as a work memory in accordance with a character pattern outline information which is memorized in a font ROM 114.

A printer interface 117 reads out the above stated character pattern dot information and sends it into a printer engine 130 such as an optical printer, for example a leaser beam printer. In place of the printer engine 130, it can adopt an output apparatus such as Braun tube. The printer engine 130 prints out the character in accordance with the above stated character pattern dot information.

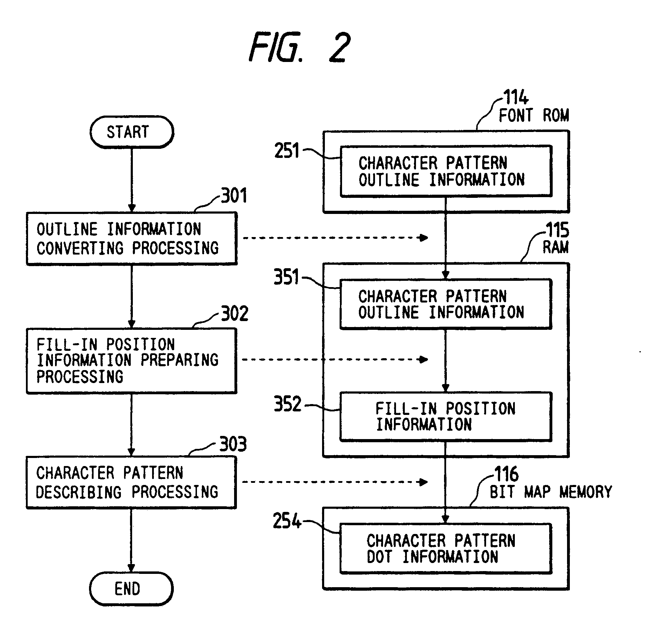

Fig. 2 shows one embodiment of a method for generating a character pattern. An outline information converting processing 301 converts a character pattern outline information 251, which is memorized in the font ROM 114, and prepares a character pattern outline information 351 in RAM (random-access memory) 115. This conversion is one in which the character pattern is converted to the character pattern outline information 351 having a different thickness dimension ratio as against an original thickness dimension ratio (an original outer shape dimension) of the character pattern.

A fill-in position information preparing processing 302 prepares a fill-in position information 352 in RAM 115 in accordance with the character pattern outline information 351. A character pattern describing processing 303 prepares a character pattern dot information 254 in the bit map memory 116 in accordance with the fill-in position information 352.

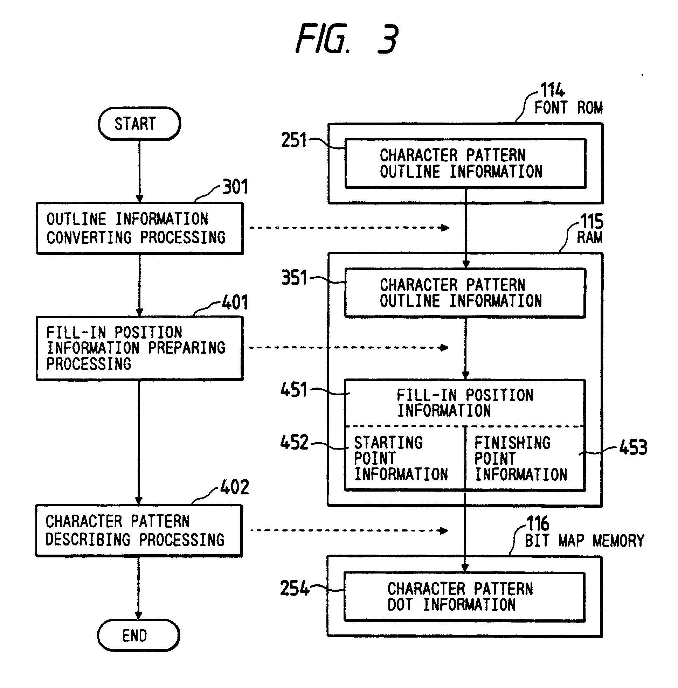

Fig. 3 shows another embodiment of a method for generating a character pattern. The outline information converting processing 301 converts the character pattern outline information 251, which is memorized in the font ROM 114, and prepares the character pattern outline information 351 in RAM 115. A fill-in position information preparing processing 401 prepares a fill-in position information 451 in RAM 115 in accordance with the character pattern outline information 351.

Herein, the fill-in position information 451 is divided to a starting point information 452 and a finishing point information 453 and memorizes the respective information. The character pattern describing processing 402 prepares the character pattern dot information 254 in the bit map memory 116 in accordance with the starting point information 452 and the finishing point information 453.

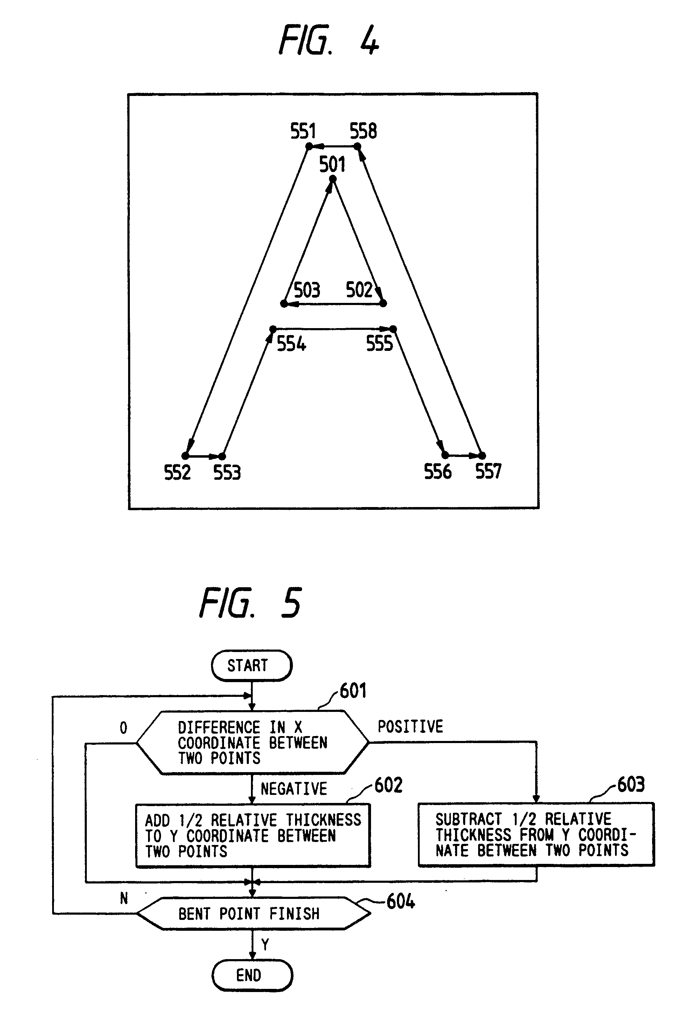

Fig. 4 is an explanatory view showing one example of the character pattern (a character pattern A) which is memorized the font ROM 114. The outline information of this character pattern constitutes of a plurality of bent points of the outline line and those bent points are memorized so as to be the outline line which is positioned inside the character pattern at a clockwise rotation (from a bent point 501, a bent point 502, to a bent point 503) and so as to be the outline line which is positioned outside the character pattern at an anti-clockwise rotation (from a bent point 551, a bent point 552, a bent point 553, a bent point 554, a bent point 555, a bent point 556, a bent point 557, to a bent point 558).

In this Fig. 4, the original thickness dimension ratio (original outer shape dimension) of the character pattern A constitutes of a plurality of points from the bent point 501 to the bent point 503 and from the bent point 551 to the bent point 558.

Fig. 5 - Fig. 8 show various kinds of processing flow charts of the outline information converting processing 301.

Fig. 5 shows one embodiment of the processing flow chart, in the outline information converting processing 301, the character pattern is made thick in the longitudinal direction by making constant the base line (the center line) so as not to move the base line of the character pattern. The difference of X coordinate of adjacent two bent points is calculated (601), when it is zero no action takes, when it is a negative value the half value of the relative thickness is added to Y coordinate of the above stated two bent points (602), and when it is a positive value the half value of the relative thickness is subtracted from Y coordinate of the above stated two bent points (603). The above stated processing carries out with respect to all of the bent points (604).

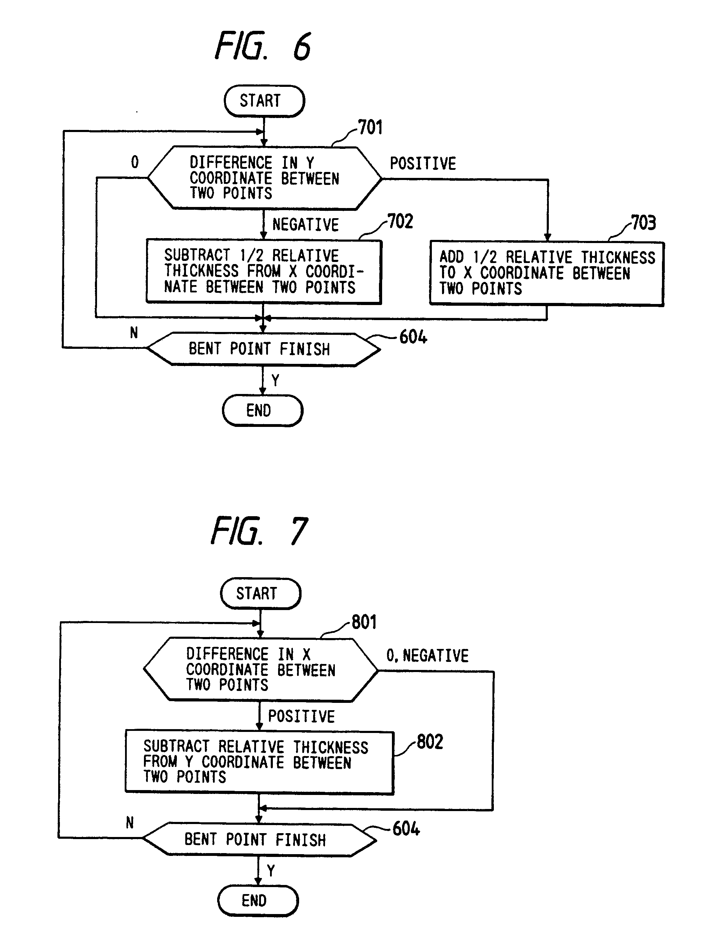

Fig. 6 shows another embodiment of the processing flow chart, in the outline information converting processing 301, the character pattern is made thick in the lateral direction by making constant the base line so as not to move the base line of the character pattern. The difference of Y coordinate of adjacent two bent points is calculated (701), when it is zero no action takes, when it is a negative value the half value of the relative thickness is subtracted from X coordinate of the above stated two bent points (702), and when it is a positive value the half value of the relative thickness is added to X coordinate of the above stated two bent points (703). The above stated processing carries out with respect to all of the bent points (604).

Fig. 7 shows a further embodiment of the processing flow chart, in the outline information converting processing 301, the character pattern is made thick in the lateral direction by making constant the base line so as to move downward the base line of the character pattern. with a relative thickness part. The difference of X coordinate of adjacent two bent points is calculated (801), when it is zero or a negative value no action takes, and when it is a positive value the half value of the relative thickness is subtracted from Y coordinate of the above stated two bent points (802). The above stated processing carries out with respect to all of the bent points (604).

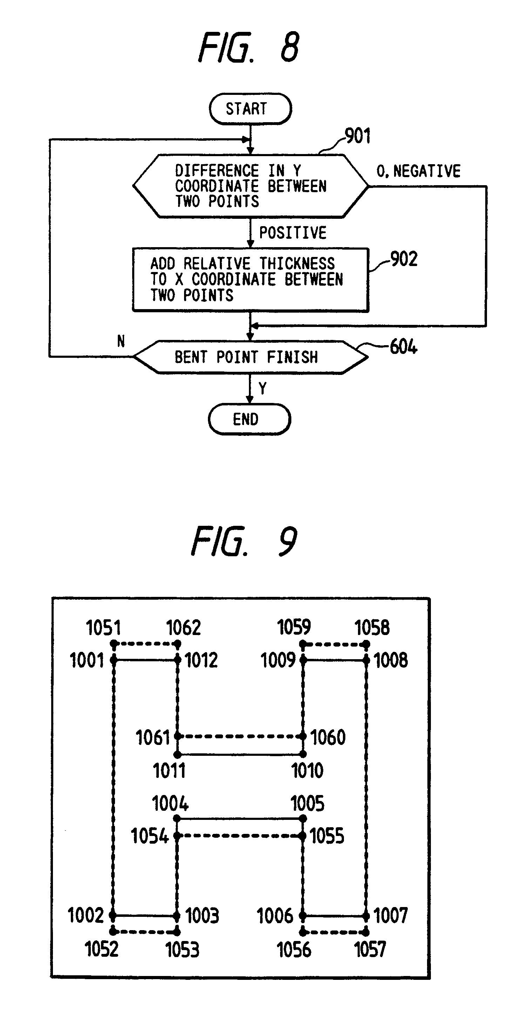

Fig. 8 shows a still further embodiment of the processing flow chart, in the outline information converting processing 301, the character pattern is made thick in the lateral direction by making constant the base line so as to move rightwardly the base line of the character pattern with a relative thickness part. The difference of Y coordinate of adjacent two bent points is calculated (901), when it is zero or a negative value no action takes, and when it is a positive value the half value of the relative thickness is added to X coordinate of the above stated two bent points (902). The above stated processing carries out with respect to all of the bent points (604).

Fig. 9 to Fig. 14 show position relationship views about before and after of the outline information in a character pattern H which is converted in accordance with adoption of the processings shown in from Fig. 5 to Fig. 8.

In Fig. 9, points from a bent point 1001 to a bent point 1012 are converted to from a bent point 1051 to a bent point 1062 by the processing shown in Fig. 5.

In Fig. 9, the original thickness dimension ratio (original outer shape dimension) of the character pattern H constitutes of a plurality of points from a bent point 1001 to a bent point 1012. The transformed thickness dimension ratio of the character pattern H constitutes of a plurality of points from a bent point 1051 to a bent point 1062.

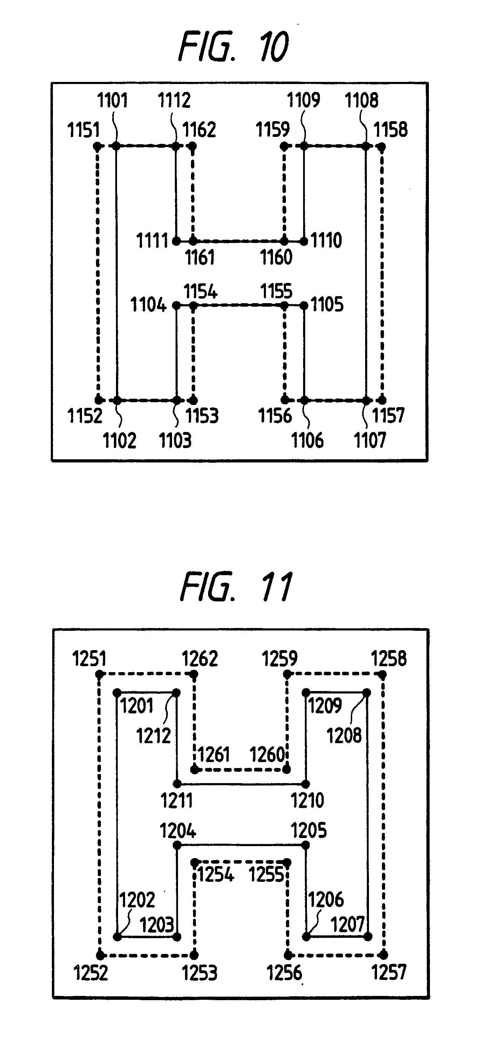

In Fig. 10, points from a bent point 1101 to a bent point 1112 are converted to from a bent point 1151 to a bent point 1162 by the processing shown in Fig. 6.

In Fig. 10, the original thickness dimension ratio (original outer shape dimension) of the character pattern H constitutes of a plurality of points from the bent point 1101 to the bent point 1112. The transformed thickness dimension ratio of the character pattern H constitutes of a plurality of points from the bent point 1151 to the bent point 1162.

In Fig. 11, points from a bent point 1201 to a bent point 1212 are converted to from a bent point 1251 to a bent point 1262 by the processing shown in Fig. 5 and Fig. 6.

In Fig. 11, the original thickness dimension ratio (original outer shape dimension) of the character pattern H constitutes of a plurality of points from the bent point 1201 to the bent point 1212. The transformed thickness dimension ratio of the character pattern H constitutes of a plurality of points from the bent point 1251 to the bent point 1262.

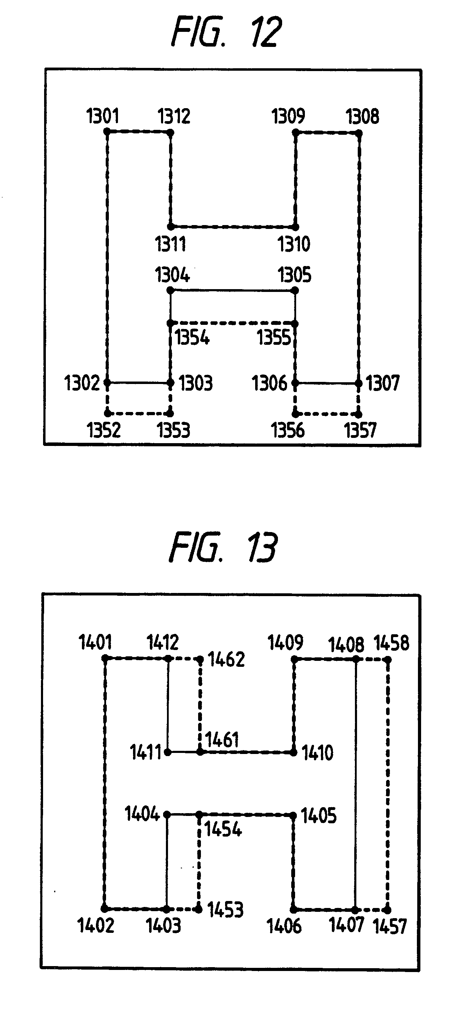

In Fig. 12, points from a bent point 1302 to a bent point 1307 are converted to from a bent point 1352 to a bent point 1357 by the processing shown in Fig. 7.

In Fig. 12, the original thickness dimension ratio (original outer shape dimension) of the character pattern H constitutes of a plurality of points from the bent point 1301 to the bent point 1312. The transformed thickness dimension ratio of the character pattern H constitutes of a plurality of points from the bent point 1301 including the bents points 1352 - 1357 to the bent point 1312.

In Fig. 13, points from a bent point 1403, a bent point 1404, a bent point 1407, a bent point 1408 a bent point 1411, and a bent point 1412 are converted to a bent point 1453, a bent point 1454, a bent point 1457, a bent point 1458, a bent point 1461, and a bent point 1462, respectively, by the processing shown in Fig. 8.

In Fig. 13, the original thickness dimension ratio (original outer shape dimension) of the character pattern H constitutes of a plurality of points from the bent point 1401 to the bent point 1412. The transformed thickness dimension ratio of the character pattern H constitutes of a plurality of points from the bent point 1401 including the bents points 1453 - 1458 to the bent point 1412.

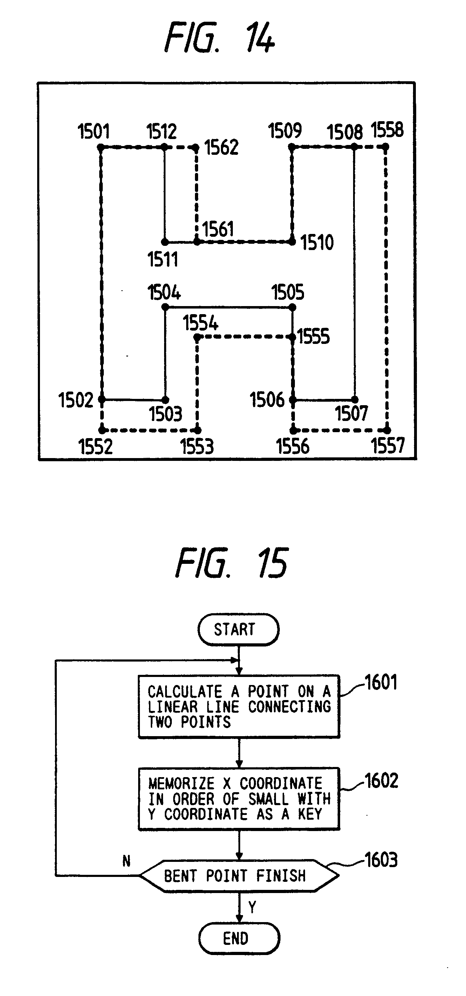

In Fig. 14, points from a bent point 1502 to a bent point 1508, and a bent point 1511 and a bent point 1512 are converted respectively from a bent point 1552 to a bent point 1558, and a bent point 1561 and a bent point 1562 by the processing shown in Fig. 7 and Fig. 8.

In Fig. 14, the original thickness dimension ratio (original outer shape dimension) of the character pattern H constitutes of a plurality of points from the bent point 1501 to the bent point 1512. The transformed thickness dimension ratio of the character pattern H constitutes of a plurality of points from the bent point 1151 including the bent points 1552 - 1558 to the bent point 1162.

Fig. 15 shows one embodiment of the processing flow chart of the fill-in position information preparing processing 302. A point on a linear line connecting adjacent two points is calculated (1601), X coordinate is memorized in order of the small value in accordance with the bent point in the above stated linear line of Y coordinate as a key point (1602), and makes the fill-in position information (352). The above stated processings carry out with respect to all of the bent points (1603).

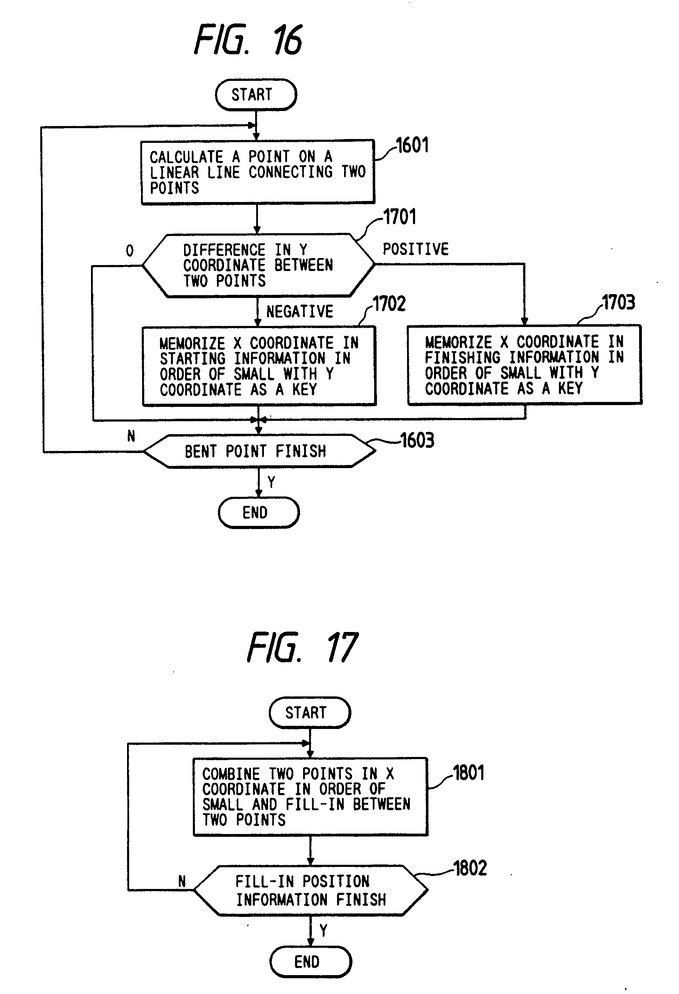

Fig. 16 shows another embodiment of the processing flow chart of the paint out position information preparing processing 401. A bent point on a linear line connecting adjacent two bent points is calculated (1601), when the difference of Y coordinate of adjacent two points is zero no action takes, when it is a negative value X coordinate is memorized in order of the small value in accordance with the point in the starting information 452 with the above stated linear line of Y coordinate as a key point (1702), when it is a positive value X coordinate is memorized in order of the small value in accordance with the point in the finishing information 453 with the above stated linear line of Y coordinate as a key point (1703), and makes the fill-in position information (351). The above stated processings carry out with respect to all of the bent points (1603).

Fig. 17 shows a further embodiment of the processing flow chart of the character pattern describing processing 303. In accordance with the fill-in position information (352), two points are combined in order of the small value of X coordinate and are filled in between two bent points (1801). The above stated processings carry out with respect to all of the fill-in position information (351) (1802).

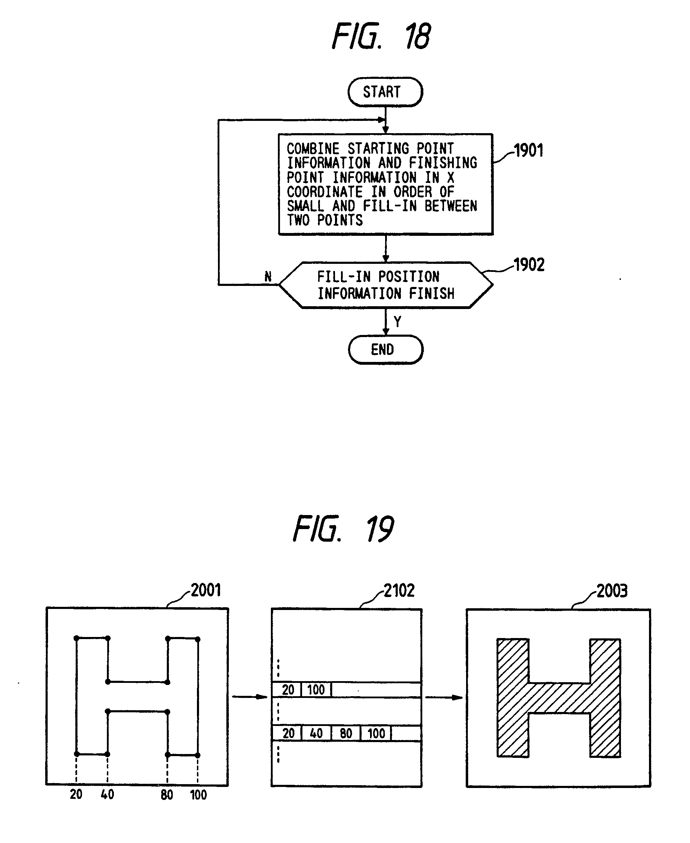

Fig. 18 shows a still further embodiment of the processing flow .chart of the character pattern describing processing 402. In accordance with the fill-in position information (352), two points are combined with the starting point information 452 and the finishing point information 453 in order of the small value of X coordinate and are filled in between two points (1901). The above stated processings carry out with respect to all of the fill-in position information (451) (1902).

Fig. 19 shows one embodiment of the data flow of the character pattern H generating method shown in Fig. 2. In Fig. 19, the character pattern H has the original thickness dimension ratio of the character pattern and is memorized with the original character outline information. Numeral 2001 represents a character pattern outline information in one frame, numeral 2102 represents a fill-in position information, and numeral 2003 represents a character pattern dot information.

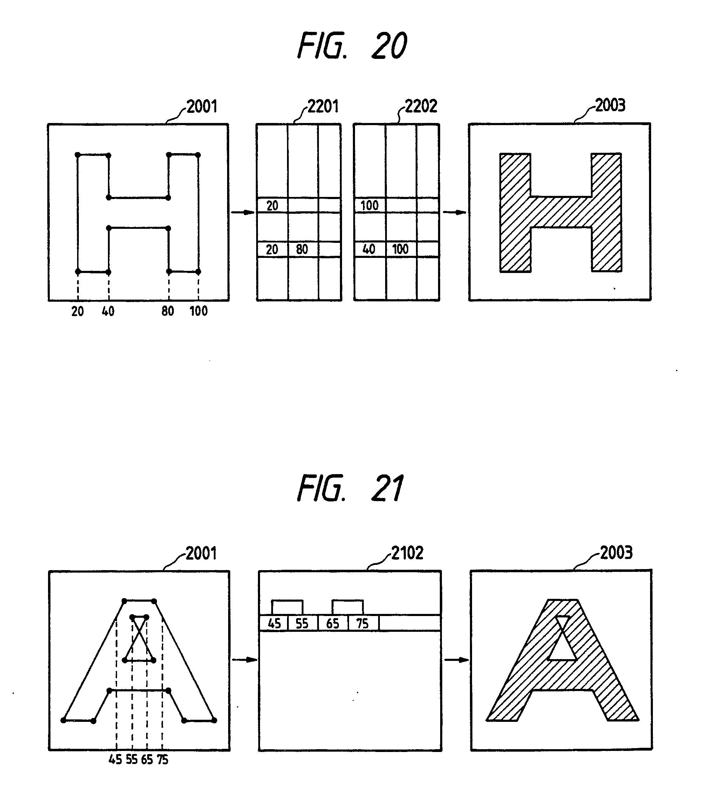

Fig. 20 shows another embodiment of the data flow of the character pattern H generating method shown in Fig. 3. Numeral 2001 represents a character pattern outline information in one frame, numeral 2201 represents a starting information of a fill-in position information, numeral 2202 represents a finishing information of the fill-in position information, and numeral 2002 represents a character pattern dot information.

Next, the difference between the character pattern generating methods shown in Fig. 2 and Fig. 3 will be explained. As shown in Fig. 19 and Fig. 20, when the character pattern outline information 351 is not crossed by the outline information converting processing 301, the character pattern generating methods shown in Fig. 2 and Fig. 3 can generate the same character pattern dot information.

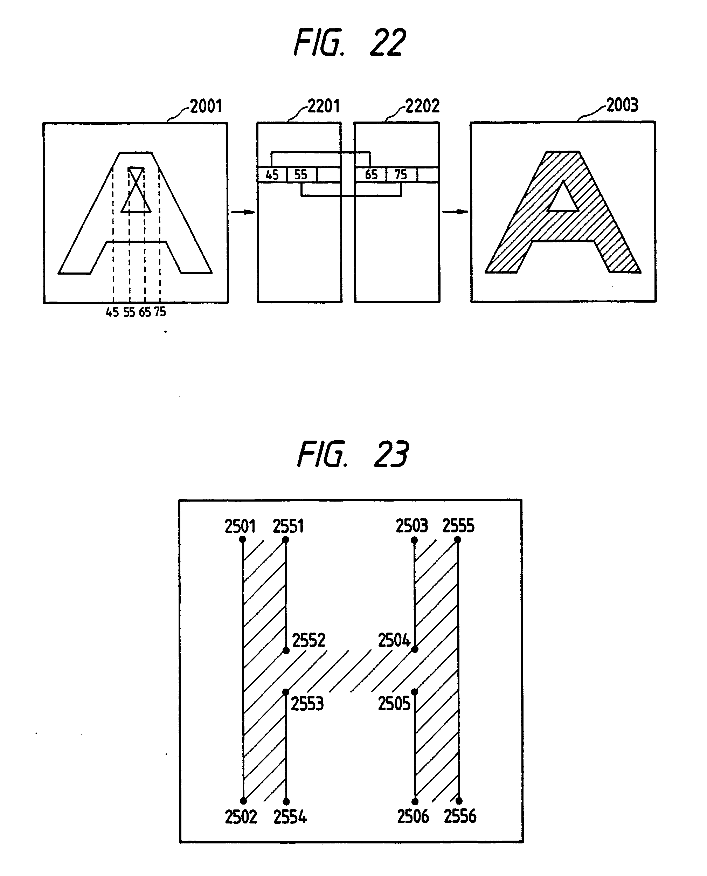

When the character pattern outline information 351 is crossed by the outline information converting processing 301, since the data flow of the character pattern generating method shown in Fig. 2 becomes to be in Fig. 21 and the data flow of the character pattern generating method shown in Fig. 3 becomes to be in Fig. 22.

In case of the character pattern generating method shown in Fig. 2, there remains unfill-in portion. In case of the character pattern generating method shown in Fig. 3, even the character pattern outline line is crossed, there does not cause the fill-in remainder, so that all of the character pattern outline lines can processed correctly.

Further, as shown in Fig. 23, the character pattern outline information is constituted to be memorized by dividing into from the bent point 2501 including the point of the starting point in case of the fill-in to the point 2506 and also from the point 2551 including the point of the finishing bent point in case of the fill-in to the point 2556. In case that when the character pattern is made thick laterally it can save the processing 701, the processing 901 and the processing 1701, so that the character pattern generating processing shown in Fig. 3 can carry out at a high speed.

According to the present invention, since it has means 301 for converting to the character pattern having the different thickness dimension ratio as against the original thickness dimension ratio of the character pattern, the character pattern is emphasized and the character pattern having a bold thickness is generated by mixing partially the character pattern having the different thickness dimension ratio in the character pattern to be generated, thereby the sentence can be emphasized all over.

Further, since it have means for converting the character outline information 251 to the character pattern outline information 351 having the different thickness dimension ratio as against the original thickness dimension ratio of the character pattern, and means 303 for memorizing the character pattern dot information in the bit map memory 116 by filling in the outline inside from the converted character pattern outline information 351, even though in the character pattern having the different thickness dimension ratio, the number for describing the picture to the bit map memory 116 is ended only one time.

Accordingly, in comparison with the dot information of the character pattern being generated by inquiring the outline line dot information from the character pattern outline information, the character pattern can be generated at a high speed.

Further, since it have a work memory 115 for memorizing the character pattern outline information converted to have different thickness dimension ratio as against the original thickness dimension ratio of the character pattern, means 302 for preparing the fill-in position information in accordance with the converted character pattern outline information 351, and means 303 for preparing the character pattern dot information in which the outline of the character pattern outline information is filled in inside in accordance with the fill-in position information 352, at the position information during the fill-in the work memory 115 can use only the memory in proportion to the longitudinal length of the character pattern. Accordingly, the character pattern having the different thickness dimension ratio as against the original thickness dimension ratio of the character pattern can be generated with the small number work memory 115.

Moreover, since it has means 301 for converting the information in which the base line of the character pattern is a constant with the different thickness dimension ratio as against the original thickness dimension ratio of the character pattern, even the character pattern having the bold thickness mixed partially in the character pattern to be generated, it can have a well balance with which the base of each character pattern is agree.

Further, since it has means 301 for converting the information in which the base line of the character pattern is moved with the different thickness dimension ratio as against original thickness dimension ratio of the character pattern, the character pattern can be emphasized not only by the thickness but also the enlargement of the character pattern.

## Claims

1. An apparatus for generating a character pattern in which a character pattern is outputted upon receipt of an input signal, comprising:
means (112) for memorizing an original character pattern outline information, said original character pattern outline information has a predetermined thickness to dimension ratio;
means (113) for converting said original character pattern outline information in said original character pattern outline information memory means to a transformed character pattern outline information, said transformed character pattern outline information has a different thickness to dimension ratio as said predetermined thickness to dimension ratio of said original character pattern outline information;
means (114) for memorizing said transformed character pattern outline information of said original character pattern outline information conversion means;
means (115) for preparing a character pattern dot information, an outline of said character pattern dot information is filled in inside in accordance with said transformed character pattern outline information of said transformed character pattern outline information memory means; and
means (116) for memorizing said character pattern dot information of said character pattern dot information preparation means.

2. An apparatus for generating a character pattern according to claim 1,
characterized by means (302) for preparing a fill-in position information in accordance with said transformed character pattern outline information (351) of said transformed character pattern outline information memory means (114).

3. An apparatus for generating a character pattern in which a character pattern is outputted upon receipt of an input signal, comprising:
means for memorizing a character pattern with a form of an outline information;
means for memorizing said character pattern with a form of a dot information; and
means for converting to an information in which a base line of said character pattern is made to be a constant in accordance with a different thickness to dimension ratio of said character pattern as an original thickness to dimension ratio of said character pattern.

4. An apparatus for generating a character pattern according to claim 1, wherein said character pattern is sent to print means (130) upon receipt of a printing information from calculation means (115), said memory means (114) for memorizing an original character pattern outline information is a font memory means,
a base line of said character pattern is made to be a constant in accordance with said different thickness to dimension ratios of said character pattern as said original thickness to dimension ratio of said character pattern;
preparation means (302) are provided for preparing a fill-in position information in accordance with said transformed character pattern outline information of said transformed character pattern outline information memory means;
said memory means for memorizing said character pattern dot information of said character pattern dot information preparation means is a bit map memory means (116).

5. An apparatus for generating a character pattern according to claim 4, wherein said conversion means (113) makes said transformed character pattern outline information a lateral thickness at a constant and makes said transformed character pattern outline information a longitudinal thickness thick.

6. An apparatus for generating a character pattern according to claim 4, wherein said conversion means (113) makes said transformed character pattern outline information a longitudinal thickness at a constant and makes said transformed character pattern outline information a lateral thickness thick.

7. An apparatus for generating a character pattern according to claim 4, wherein said conversion means (113) makes said transformed character pattern outline information both the lateral thickness and the longitudinal thickness thick.

8. An apparatus for generating a character pattern according to claim 3, wherein a base line of said character pattern is moved with a different thickness dimension ratio as against said original thickness dimension ratio of said character pattern.

9. An apparatus for generating a character pattern according to claim 8, wherein said conversion means (113) makes said transformed character pattern outline information a longitudinal dimension thick by moving said base line of said character pattern toward an up-and-down direction.

10. An apparatus for generating a character pattern according to claim 8, wherein said conversion means (113) makes said transformed character pattern outline information a height dimension at a constant and makes said transformed character pattern outline information a lateral dimension thick by moving said base line of said character pattern toward a left-and-right direction.

11. An apparatus for generating a character pattern according to claim 8, wherein said conversion means (113) makes said transformed character pattern outline information both the height dimension and the lateral dimension thick by moving said base line of said character pattern toward an up-and-down direction and a left-and-right direction.

12. In apparatus for generating a character pattern according to claim 5, wherein said outline information of said character pattern constitutes of a plurality of bent points of an outline line of said character pattern, a difference of X coordinate of adjacent said two bent points is calculated, when said difference is zero or a negative value no action takes, and said difference is a positive value a predetermined value of a relative thickness of each said bent point is subtracted from Y coordinate of said two bent points.

13. An apparatus for generating a character pattern according to claim 6, wherein said outline information of said character pattern constitutes of a plurality of bent points of an outline line of said character pattern, a difference of Y coordinate of adjacent said two bent points is calculated, when said difference is zero no action takes, when said difference is a negative value a predetermined value of a relative thickness of each said bent point is subtracted from x coordinate of said two bent points, and when said difference is a positive value a predetermined value of a relative thickness of each said bent point is added to X coordinate of said two bent points.

14. An apparatus for generating a character pattern according to claim 7, wherein said outline information of said character pattern constitutes of a plurality of bent points of an outline of said character pattern, a difference of X coordinate of adjacent two said bent points is calculated, when said difference is zero or a negative value no action takes, and when said difference is a positive value a predetermined value of a relative thickness of each said bent point is added to X coordinate of two said bent points.

15. An apparatus for generating a character pattern according to claim 4, wherein said outline information of said character pattern constitutes of a plurality of bent points of an outline line of said character pattern, a point on a linear line connecting adjacent said two bent points is calculated, X coordinate is memorized in order of small value in accordance with said bent point in said linear line of Y coordinate, and said fill-in position information for each said bent point is made.

16. An apparatus for generating a character pattern according to claim 4, wherein said outline information of said character pattern constitutes of a plurality of bent points of an outline line of said character pattern, a point on a linear line connecting adjacent said two bent points is calculated, when a difference of Y coordinate of adjacent said two bent points is zero no action takes, when said difference is a negative value X coordinate is memorized in order of small value in accordance with said bent point in a starting information with said linear line of Y coordinate, when said difference is a positive value X coordinate is memorized in order of small value in accordance with said bent point in a finishing information with said linear line of Y coordinate, and said fill-in position information for each said bent point is made.

17. An apparatus for generating a character pattern according to claim 4, wherein in accordance with said fill-in position information, said two bent points are combined with a starting point and a finishing point in order of small value of X coordinate and are filled in between said two bent points, and said fill-in position information for each said bent point is made.

18. A method for generating a character pattern in which a character pattern is outputted upon receipt of an input signal wherein, after a character pattern outline information is converted to another character pattern outline information with a different thickness to dimension ratio as an original thickness to dimension ratio, a character pattern outline information is memorized by filling in said outline inside.

19. A method for generating a character pattern in which a character pattern is outputted upon receipt of an input signal, comprises steps of: memorizing an original character pattern outline information, said original character pattern outline information has a predetermined thickness to dimension ratio;
converting said original character pattern outline information to a transformed character pattern outline information, said tranformed character pattern outline information has a different thickness to dimension ratio as said predetermined thickness to dimension ratio of said original character pattern outline information;
memorizing said transformed character pattern outline information;
preparing a character pattern dot information, an outline of said character pattern dot information is filled in inside in accordance with said transformed character pattern outline information; and
memorizing said character pattern dot information.

20. A method for generating a character pattern according to claim 19, further comprising a step of: preparing a fill-in position information in accordance with said transformed character pattern outline information.

21. A method for generating a character pattern in which a character pattern is outputted upon receipt of an input signal, comprises steps of: memorizing a character pattern with a form of an outline information;
memorizing said character pattern with a form of a dot information; and
converting to an information in which a base line of said character pattern is made to be a constant in accordance with a different thickness to dimension ratio of said character pattern as the original thickness to dimension ratio of said character pattern.

22. A method for generating a character pattern according to claim 19, wherein said character pattern is sent to print means upon receipt of a printing information from calculation means;
a base line of said character pattern is made to be a constant in accordance with said different thickness dimension ratio of said character pattern as against said original thickness dimension ratio of said character pattern;
a further step is provided for preparing a fill-in position information in accordance with said transformed character pattern outline information.

23. A method for generating a character pattern according to claim 22, wherein a lateral thickness of said transformed character pattern outline information is made at a constant and a longitudinal thickness of said transformed character pattern outline information is made thick.

24. A method for generating a character pattern according to claim 22, wherein a longitudinal thickness of said transformed character pattern outline information is made at a constant and a lateral thickness of said transformed character pattern outline information is made thick.

25. A method for generating a character pattern according to claim 22, wherein both the lateral thickness and the longitudinal thickness of said transformed character pattern outline information are made thick.

26. A method for generating a character pattern according to claim 21, said base line of said character pattern is moved with a different thickness dimension ratio as against said original thickness dimension ratio of said character pattern.

27. A method for generating a character pattern according to claim 22, wherein a longitudinal dimension of said transformed character pattern outline information is made thick by moving said base line of said character pattern toward an up-and down direction.

28. A method for generating a character pattern according to claim 22, wherein a height dimension of said transformed character pattern outline information is made at a constant and a lateral dimension of said transformed character pattern outline information is made thick by moving said base line of said character pattern toward a left-and right direction.

29. A method for generating a character pattern according to claim 22, wherein both the height dimension and the lateral dimension of said transformed character pattern outline information are made thick by moving said base line of said character pattern toward an up-and-down direction and a left-and-right direction.

30. A method for generating a character pattern according to claim 27, wherein said outline information of said character pattern constitutes of a plurality of bent points of an outline line of said character pattern, a difference of X coordinate of adjacent said two bent points is calculated, when said difference is zero or a negative value no action takes, and said difference is a positive value a predetermined value of a relative thickness of each said bent point is subtracted from Y coordinate of said two bent points.

31. A method for generating a character pattern according to claim 28, wherein said outline information of said character pattern constitutes of a plurality of bent points of an outline line of said character pattern, a difference of Y coordinate of adjacent said two bent points is calculated, when said difference is zero no action takes, when said difference is a negative value a predetermined value of a relative thickness of each said bent point is subtracted from X coordinate of said two bent points, and when said difference is a positive value a predetermined value of a relative thickness of each said bent point is added to X coordinate of said two bent points.

32. A method for generating a character pattern according to claim 29, wherein said outline information of said character pattern constitutes of a plurality of bent points of an outline of said character pattern, a difference of X coordinate of adjacent two said bent points is calculated, when said difference is zero or a negative value no action takes, and when said difference is a positive value a predetermined value of a relative thickness of each said bent point is added to X coordinate of said two bent points.

33. A method for generating a character pattern according to claim 22, wherein said outline information of said character pattern constitutes of a plurality of bent points of an outline line of said character pattern, a point on a linear line connecting adjacent said two bent points is calculated, X coordinate is memorized in order of small value in accordance with said bent point in said linear line of Y coordinate, and said fill-in position information for each said bent point is made.

34. A method for generating a character pattern according to claim 22, wherein said outline information of said character pattern constitutes of a plurality of bent points of an outline line of said character pattern, a point on a linear line connecting adjacent said two bent points is calculated, when a difference of Y coordinate of adjacent two said bent points is zero no action takes, when said difference is a negative value X coordinate is memorized in order of small value in accordance with said bent point in a starting information with said linear line of Y coordinate, when said difference is a positive value X coordinate is memorized in order of small value in accordance with said bent point in a finishing information with said linear line of Y coordinate, and said fill-in position information for each said bent point is made.

35. A method for generating a character pattern according to claim 22, wherein in accordance with said fill-in position information, said two bent points are combined with a starting point point and a finishing point in order of small value of X coordinate and are filled in between said two bent points, and said fill-in position information for each said bent point is made.

# FIG. 1

# FIG. 2

START

114
FONT ROM

251 — CHARACTER PATTERN
OUTLINE INFORMATION

301
OUTLINE INFORMATION
CONVERTING PROCESSING

115
RAM

351 — CHARACTER PATTERN
OUTLINE INFORMATION

302
FILL-IN POSITION
INFORMATION PREPARING
PROCESSING

352 — FILL-IN POSITION
INFORMATION

303
CHARACTER PATTERN
DESCRIBING PROCESSING

116
BIT MAP MEMORY

254 — CHARACTER PATTERN
DOT INFORMATION

END

## FIG. 3

## FIG. 4

## FIG. 5

## FIG. 6

START

701 — DIFFERENCE IN Y COORDINATE BETWEEN TWO POINTS

0

POSITIVE

NEGATIVE

702 — SUBTRACT 1/2 RELATIVE THICKNESS FROM X COORDINATE BETWEEN TWO POINTS

703 — ADD 1/2 RELATIVE THICKNESS TO X COORDINATE BETWEEN TWO POINTS

N

BENT POINT FINISH — 604

Y

END

## FIG. 7

START

801 — DIFFERENCE IN X COORDINATE BETWEEN TWO POINTS

0, NEGATIVE

POSITIVE

SUBTRACT RELATIVE THICKNESS FROM Y COORDINATE BETWEEN TWO POINTS — 802

N

BENT POINT FINISH — 604

Y

END

## FIG. 8

```
                    START

                                              901
            DIFFERENCE IN Y              0, NEGATIVE
            COORDINATE BETWEEN
            TWO POINTS

                    POSITIVE

            ADD RELATIVE THICKNESS        902
            TO X COORDINATE BETWEEN
            TWO POINTS

        N                                     604
            BENT POINT FINISH

                    Y

                    END
```

## FIG. 9

```
        1051      1062        1059      1058
        1001 ●----●          1009 ●----● 1008
             ● 1012               ●
                1061 ●----● 1060
                     1011    1010

                1004      1005
        1054 ●----●          ● 1055

        1002 ●    ● 1003    1006 ●    ● 1007
        1052   1053          1056   1057
```

*FIG. 10*

*FIG. 11*

## FIG. 12

## FIG. 13

# FIG. 14

1501 1512 1562 1509 1508 1558

1561
1511 1510

1504 1505
1554 1555

1502 1506 1507
1503
1552 1553 1556 1557

# FIG. 15

START

CALCULATE A POINT ON A
LINEAR LINE CONNECTING — 1601
TWO POINTS

MEMORIZE X COORDINATE
IN ORDER OF SMALL WITH — 1602
Y COORDINATE AS A KEY

BENT POINT FINISH — 1603

N

Y

END

EP 0 385 269 A2

## FIG. 16

```
              START
                │
                ▼
    ┌──────────────────────────┐      1601
    │ CALCULATE A POINT ON A    │
    │ LINEAR LINE CONNECTING TWO │
    │ POINTS                     │
    └──────────────────────────┘
                │
                ▼                        1701
    0  ⟨ DIFFERENCE IN Y        ⟩  POSITIVE
       ⟨ COORDINATE BETWEEN     ⟩
       ⟨ TWO POINTS             ⟩
                │
           NEGATIVE              1702              1703
                ▼                            ▼
    ┌──────────────────────────┐   ┌──────────────────────────┐
    │ MEMORIZE X COORDINATE IN  │   │ MEMORIZE X COORDINATE IN  │
    │ STARTING INFORMATION IN   │   │ FINISHING INFORMATION IN  │
    │ ORDER OF SMALL WITH Y     │   │ ORDER OF SMALL WITH Y     │
    │ COORDINATE AS A KEY       │   │ COORDINATE AS A KEY       │
    └──────────────────────────┘   └──────────────────────────┘
                │
   N  ⟨ BENT POINT FINISH ⟩    1603
                │
                Y
                ▼
              END
```

## FIG. 17

```
              START
                │
                ▼
    ┌──────────────────────────┐      1801
    │ COMBINE TWO POINTS IN X   │
    │ COORDINATE IN ORDER OF     │
    │ SMALL AND FILL-IN BETWEEN  │
    │ TWO POINTS                 │
    └──────────────────────────┘
                │
                ▼
   N  ⟨ FILL-IN POSITION        ⟩   1802
      ⟨ INFORMATION FINISH      ⟩
                │
                Y
                ▼
              END
```

## FIG. 18

```
        START
          │
          ▼
┌─────────────────────────────┐
│ COMBINE STARTING POINT      │
│ INFORMATION AND FINISHING   │──── 1901
│ POINT INFORMATION IN X      │
│ COORDINATE IN ORDER OF      │
│ SMALL AND FILL-IN BETWEEN   │
│ TWO POINTS                  │
└─────────────────────────────┘
          │
          ▼
       ╱─────────────────╲
    N ╱  FILL-IN POSITION  ╲──── 1902
  ◄──◄   INFORMATION FINISH  ╲
       ╲─────────────────╱
          │ Y
          ▼
        END
```

## FIG. 19

FIG. 20

FIG. 21

## FIG. 22

## FIG. 23